# EUROPEAN PATENT APPLICATION

(11) **EP 4 462 896 A1**
(43) Date of publication of application: **13.11.2024**
(21) Application number: 23737450.9
(22) Date of filing: 06.01.2023
(51) Int. Cl.: H04W 56/00, H04W 48/10, H04W 72/04, H04L 1/08

(54) **METHOD AND APPARATUS FOR TRANSMITTING AND RECEIVING SIGNAL BY REDUCED CAPACITY TERMINAL**

(30) Priority: 06.01.2022 KR 20220002324; 04.01.2023 KR 20230001148
(71) Applicant: KT Corporation, Seongnam-si, Gyeonggi-do 13606 (KR)
(72) Inventor: PARK, Ki Hyeon, Seongnam-si Gyeonggi-do 13606 (KR)
(74) Representative: Brevalex
(86) International application number: PCT/KR2023/000328
(87) International publication number: WO 2023/132702

(57) **Abstract**

Provided are a method and apparatus for transmitting and receiving a synchronization signal block. The method may include receiving, by a reduced capacity terminal, configuration information for receiving an SSB in a limited bandwidth from a base station; on the basis of the configuration information, receiving a first PBCH of the SSB within a first frequency resource; and on the basis of the configuration information, receiving a second PBCH of the SSB within a second frequency resource.

## Description

### Technical Field

The disclosure relates to methods and devices for a reduced-capacity user equipment (UE) to transmit and receive signals in a next-generation radio access network (hereinafter, "new radio (NR)").

### Background Art

Recently, the 3rd generation partnership project (3GPP) has approved the "Study on New Radio Access Technology", a study item for research on next-generation/5G radio access technology (hereinafter, referred to as "new radio" or "NR"). Based on the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced but also to meet various requirements in detailed and specific usage scenarios.

Enhanced mobile broadband (eMBB), massive machine-type communication (mMTC), and ultra reliable and low latency communication (URLLC) are proposed as representative usage scenarios of the NR. To meet the requirements of the individual scenarios, it is required to design the NR to have flexible frame structures, compared with the LTE/LTE-Advanced.

Because the requirements for data rates, latency, reliability, coverage, etc. differ from one another, a method is necessary to efficiently multiplex a radio resource unit based on different numerologies (e.g., subcarrier spacing, subframe, Transmission Time Interval (TTI), etc.) as a method for efficiently satisfying each usage scenario requirement through a frequency band constituting any NR system.

As part of such an aspect, there is a need for a design for efficient synchronization signal block reception in user equipment (UE) using a limited bandwidth, such as reduced-capacity UE.

### Detailed Description of the InventionTechnical Problem

The disclosure may provide a method and device for a reduced-capacity UE to transmit/receive signals, where the reduced-capacity UE is capable of transmitting/receiving synchronization signal blocks between the reduced-capacity UE using a limited bandwidth and a base station.

### Technical Solution

In an aspect, the disclosure may provide a method for receiving a signal by a reduced-capacity user equipment (UE). The method may include receiving configuration information for receiving a synchronization signal block (SSB) in a limited bandwidth from a base station, receiving a first physical broadcast channel (PBCH) of the SSB in a first frequency resource based on the configuration information, and receiving a second PBCH of the SSB in a second frequency resource based on the configuration information.

In another aspect, the disclosure may provide a method for transmitting a signal to a reduced-capacity UE, by a base station. The method may include transmitting configuration information for receiving a synchronization signal block (SSB) in a limited bandwidth, transmitting a first physical broadcast channel (PBCH) of the SSB in a first frequency resource based on the configuration information, and transmitting a second PBCH of the SSB in a second frequency resource based on the configuration information.

In further another aspect, the disclosure may provide a reduced-capacity UE receiving a signal. The UE may include a transmitter, a receiver, and a controller controlling the transmitter and the receiver, and perform the following operations: receiving configuration information for receiving a synchronization signal block (SSB) in a limited bandwidth from a base station, receiving a first physical broadcast channel (PBCH) of the SSB in a first frequency resource based on the configuration information, and receiving a second PBCH of the SSB in a second frequency resource based on the configuration information.

In still another aspect, the disclosure may provide a base station transmitting a signal to a reduced-capacity UE. The base station may include a transmitter, a receiver, and a controller controlling the transmitter and the receiver, and perform the following operations: transmitting configuration information for receiving a synchronization signal block (SSB) in a limited bandwidth, transmitting a first physical broadcast channel (PBCH) of the SSB in a first frequency resource based on the configuration information, and transmitting a second PBCH of the SSB in a second frequency resource based on the configuration information.

### Advantageous Effects

According to the embodiments, a reduced-capacity UE may successfully transmit and receive a synchronization signal block using a limited bandwidth with a base station although the reduced-capacity UE supports only a limited operation bandwidth as compared with the operation bandwidth required for the typical UE.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of symbol level alignment among different subcarrier spacings (SCSs) in accordance with embodiments of the present disclosure;
FIG. 9 is a view schematically illustrating a bandwidth part;
FIG. 10 is a flowchart illustrating a method of a a reduced-capacity UE for receiving a signal according to an embodiment;
FIG. 11 is a flowchart illustrating a method of a base station for transmitting a signal to a reduced-capacity UE according to an embodiment;
FIGS. 12 and 13 are views illustrating a configuration of a synchronization signal block according to an embodiment;
FIG. 14 is a block diagram illustrating a UE according to an embodiment; and
FIG. 15 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

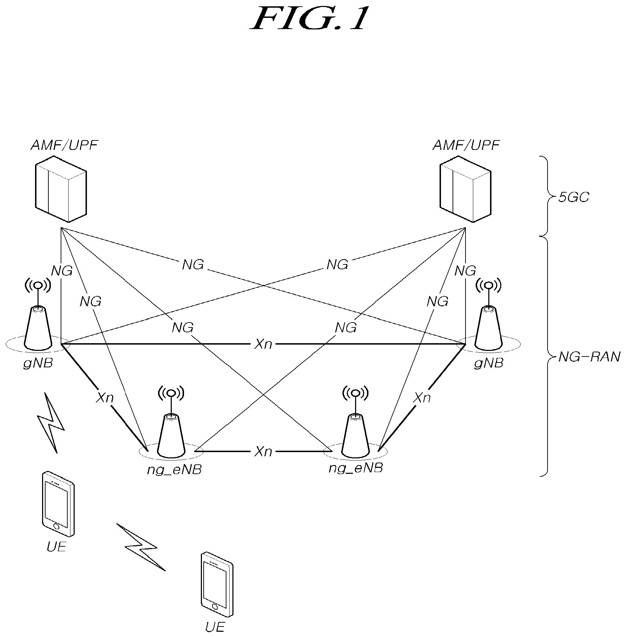

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

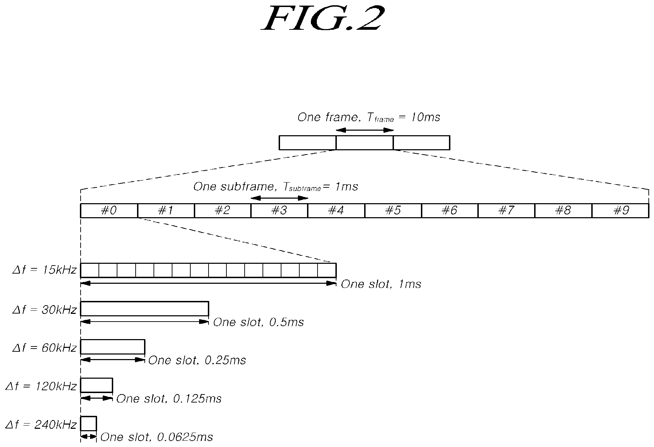

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

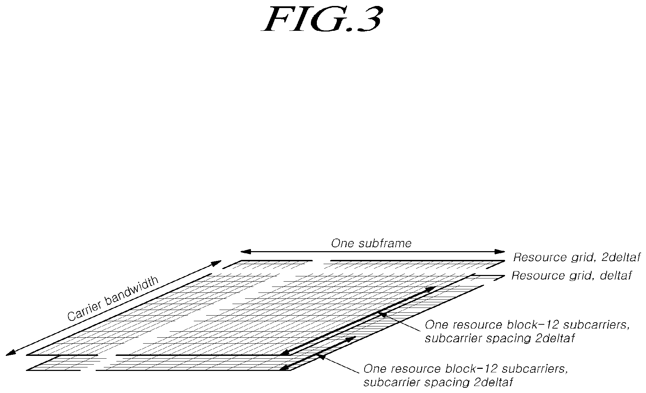

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

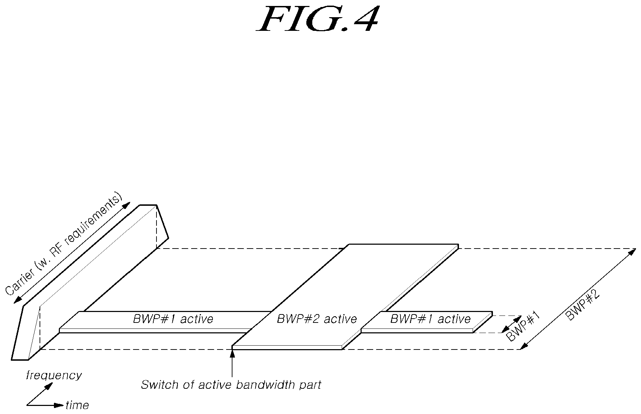

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

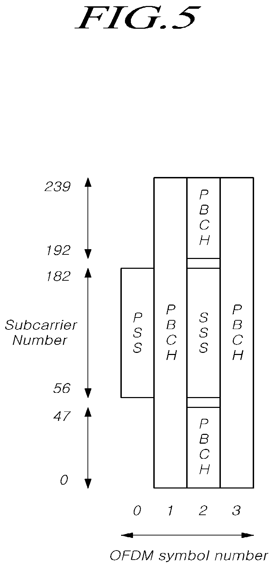

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB 1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

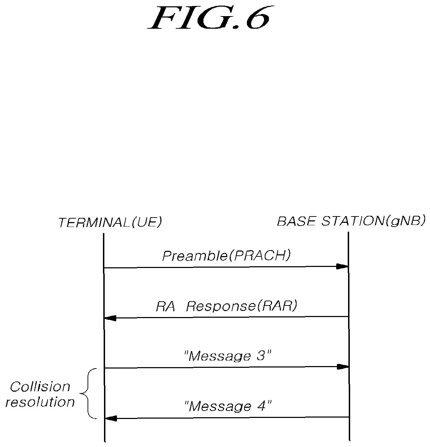

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

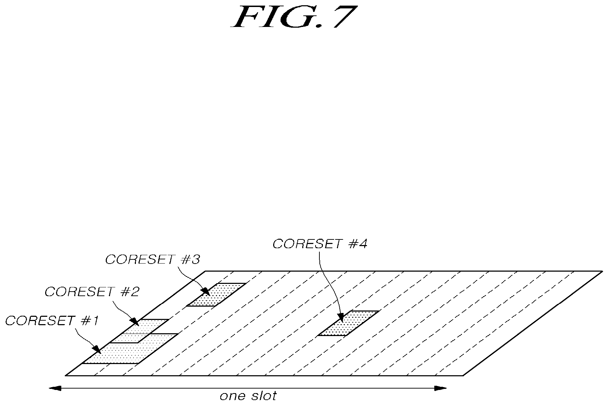

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### <SSB>

The UE may perform cell search, system information acquisition, beam alignment for initial access, and DL measurement based on synchronization signal block (SSB). The SSB is used interchangeably with a Synchronization Signal/Physical Broadcast Channel (SS/PBCH) block.

The SSB is composed of a PSS, an SSS and a PBCH. The SSB is configured in 4 contiguous OFDM symbols, and the PSS, PBCH, SSS/PBCH and PBCH are individually transmitted in the OFDM symbols. The PSS and SSS each are composed of 1 OFDM symbol and 127 subcarriers, and the PBCH is composed of 3 OFDM symbols and 576 subcarriers. Polar coding and Quadrature Phase Shift Keying (QPSK) are applied to the PBCH. The PBCH is composed of a data RE and a demodulation reference signal (DMRS) RE for each OFDM symbol. There are 3 DMRS REs for each RB, and 3 data REs exist between the DMRS REs.

The SSB is periodically transmitted according to SSB periodicity. In the ninitial cell search, the UE assumes the SSB periodicity as a default SSB periodicity which is defined as 20ms. After cell connection, the SSB periodicity may be set as one of {5ms, 10ms, 20ms, 40ms, 80ms, 160ms} by the network (e.g., base station). An SSB burst set is configured at the beginning of the SSB periodicity. The SSB burst set is constituted of a 5 ms time window (i.e., a half-frame), and the SSB may be transmitted up to L times within the SS burst set. The maximum number of transmissions L of the SSB may be given as follows depending on the frequency band of the carrier. One slot includes up to two SSBs.
- For frequency range up to 3 GHz, L = 4
- For frequency range from 3 GHz to 6 GHz, L = 8
- For frequency range from 6 GHz to 52.6 GHz, L = 64

The temporal position of the SSB candidate in the SSB burst set may be defined as follows according to the SCS. The temporal position of the SSB candidate is indexed from 0 to L-1 in the SSB burst set (i.e., half-frame) according to the chronological order (SSB index).
- Case A -15 kHz SCS: The index of the starting symbol of the candidate SSB is given by {2, 8} + 14*n. When the carrier frequency is 3 GHz or less, n = 0 and 1. When the carrier frequency is 3 GHz to 6 GHz, n = 0, 1, 2, and 3.
- Case B -30 kHz SCS: The index of the starting symbol of the candidate SSB is given by {4, 8, 16, 20} + 28*n. When the carrier frequency is 3 GHz or less, n = 0. When the carrier frequency is 3 GHz to 6 GHz, n = 0 and 1.
- Case C -30 kHz SCS: The index of the starting symbol of the candidate SSB is given by {2, 8} + 14*n. When the carrier frequency is 3 GHz or less, n = 0 and 1. When the carrier frequency is 3 GHz to 6 GHz, n = 0, 1, 2, and 3.
- Case D -120 kHz SCS: The index of the starting symbol of the candidate SSB is given by {4, 8, 16, 20} + 28*n. When the carrier frequency is larger than 6 GHz, n=0, 1, 2, 3, 5, 6, 7, 8, 10, 11, 12, 13, 15, 16, 17, or 18.
- Case E -240 kHz SCS: The index of the starting symbol of the candidate SSB is given as {8, 12, 16, 20, 32, 36, 40, 44} + 56*n. When the carrier frequency is larger than 6 GHz, n = 0, 1, 2, 3, 5, 6, 7, or 8.

The UE may obtain DL synchronization by detecting the SSB. The UE may identify the structure of the SSB burst set based on the detected SSB index and may detect the symbol/slot/half-frame boundary accordingly. The number of the frame/half-frame to which the detected SSB belongs may be identified using the SFN information and the half-frame indication information.

Specifically, the UE may obtain 10-bit system frame number (SFN) information from the PBCH. Of the 10-bit SFN information, 6 bits are obtained from the master information block (MIB), and the remaining 4 bits are obtained from the PBCH transport block (TB).

Next, the UE may obtain 1-bit half-frame indication information. When the carrier frequency is 3 GHz or less, the half-frame indication information may be implicitly signaled using the PBCH DMRS. The PBCH DMRS indicates 3-bit information using one of the 8 PBCH DMRS sequences. Therefore, when L = 4, one bit remaining after indicating the SSB index among the three bits that may be indicated using the eight PBCH DMRS sequences may be used for half-frame indication.

Finally, the UE may obtain the SSB index based on the DMRS sequence and the PBCH payload. The SSB candidates are indexed from 0 to L-1 in the SSB burst set (i.e., half-frame) in chronological order. When L = 8 or 64, the three least significant bits (LSBs) of the SSB index may be indicated using eight different PBCH DMRS sequences. When L = 64, three most significant bits (MSBs) of the SSB index are indicated through the PBCH. When L = 2, the two LSBs of the SSB index may be indicated using four different PBCH DMRS sequences. When L = 4, one bit remaining after indicating the SSB index among the three bits that may be indicated using the eight PBCH DMRS sequences may be used for half-frame indication.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR (New Radio)

The NR is required to be designed not only to provide an improved data transmission rate but also to meet various QoS requirements for each detailed and specific usage scenario, compared with the LTE/LTE-Advanced. In particular, enhanced mobile broadband (eMBB), massive machine-type communication (mMTC), and ultra reliable and low latency communication (URLLC) are defined as representative usage scenarios of the NR. To meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms. Unlike the LTE, since the subframe of the NR is an absolute reference time duration, a slot and a mini-slot may be defined as a time unit for actual UL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or UL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

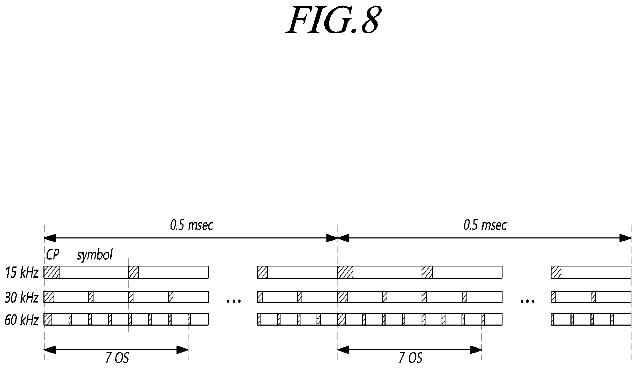

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 8, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTIlengths from one another are defined in the NR, technologies have been developed for satisfying requirements of each of the URLLC and the eMBB.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

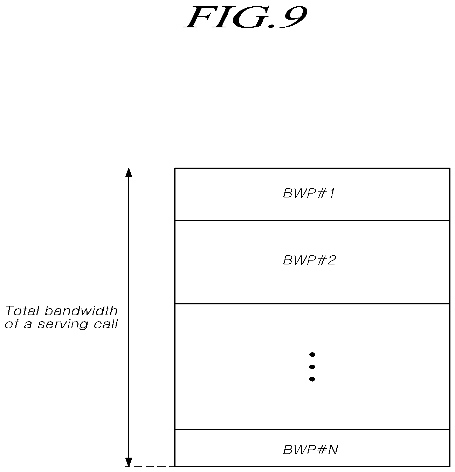

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

Hereinafter, a method for configuring a synchronization signal for a reduced-capability UE (RedCap UE) supporting only a narrow bandwidth in a 3GPP NR system according to embodiments of the disclosure will be described in detail. In the disclosure, the term "reduced-capacity UE" is used for denoting a UE that uses a limited bandwidth to transmit and receive signals. However, the embodiments are not limited thereto. a . For example, it may also be referred to as a "low power UE", a "low performance UE", a "reduced-capability UE", a "REDCAP UE", or the like.

In the typical 3GPP NR, all UEs are designed to operate under the assumption that they basically support 100 MHz in FR1 and 400 MHz in FR2. However, in a reduced-capacity environment for a UE that requires only performance lower than the default performance provided in NR, such as IoT, it is necessary to perform UE-base station communication using only a limited frequency band. In particular, in the NR-REDCAP work item of Rel-17, it was agreed to support UEs having an operating band of 20 MHz in FR1 and 50 MHz in FR2, and it was also agreed to create a standard for supporting UEs having a band less than 5 MHz in the NR_LessThan_5 MHz_FR1 work item of Rel-18. In this regard, the following matters are required.

Identify and specify necessary changes to NR physical layer with minimal specification impact to operate in spectrum allocations from approximately 3 MHz up to below 5 MHz:

Restrict to subcarrier spacing of 15kHz and the use of normal cyclic prefix.

### For SSB:

Reuse PSS/SSS specification without puncturing.

PBCH based on current design.

Identify and specify necessary minimum changes to PDCCH, CSI-RS/TRS, PUCCH, and PRACH for functional support based on existing design, without optimization.

In this regard, the system band required by the typical synchronization signal block (SSB) in the NR is as follows. The SSB is composed of a physical broadcast channel (PBCH) for transferring master information block (MIB), a primary synchronization signal (PSS), and a secondary synchronization signal (SSS). The SSB has a frequency width of 20 resource blocks (RBs). The SSB has a band of about 3.75 MHz when the subcarrier spacing (SCS) frequency is 15 kHz, which is supported by FR1. The SSB has a band of about 7.5 MHz when the subcarrier spacing (SCS) frequency is 30 kHz. Further, the SSB has a band of about 30 MHz when the subcarrier spacing (SCS) frequency is 120 kHz, which is supported by FR2. The SSB has a band of about 60 MHz when the subcarrier spacing (SCS) frequency is 240 kHz.

In the typical synchronization signal, a symbol occupied by the PSS/SSS is 1, the frequency width is 12 RBs, and the PBCH occupies 4 RBs above and below each synchronization signal. Further, the PBCH additionally uses two symbols each of which is 20RB wide, so the total number of symbols of the SSB is 4.

In the typical reduced capability (REDCAP) system, the UE was required to support a bandwidth of 20MHz in FR1. Under these requirements, the above synchronization signal has no problem in receiving. However, when the UE supports 3MHz, the current synchronization signal may not be received.

Accordingly, the disclosure provides a method for a reduced-capacity UE having an operating bandwidth narrower than the required bandwidth required in the synchronization signal in NR to successfully receive a synchronization signal.

Hereinafter, a method for a reduced-capacity UE operating in a limited bandwidth to transmit/receive a synchronization signal block will be described in detail with reference to the relevant drawings.

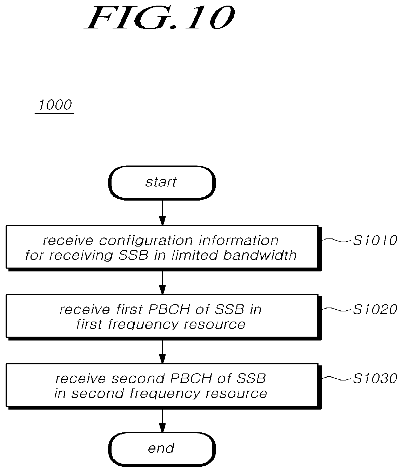

FIG. 10 is a flowchart illustrating a method (e.g., a procedure 1000) for a reduced-capability UE to receive a signal according to an embodiment.

Referring to FIG. 10, the UE may receive configuration information for receiving the SSB in a limited bandwidth from the base station (S1010).

In accordance with an embodiment, a reduced-capacity UE supporting a limited bandwidth may receive configuration information for receiving an SSB in the limited bandwidth through system information or higher layer signaling. The corresponding configuration information may include information necessary for the reduced-capacity UE to receive the SSB, such as information about the SSB structure separately configured for the reduced-capacity UE, beam-related information used for transmission of the SSB, and the like. According to an embodiment, the limited bandwidth of the reduced-capacity UE may be configured of 15 RBs or 16 RBs. However, the embodiments are not limited thereto. Any bandwidth narrower than 20 RB required for SSB transmission may be set.

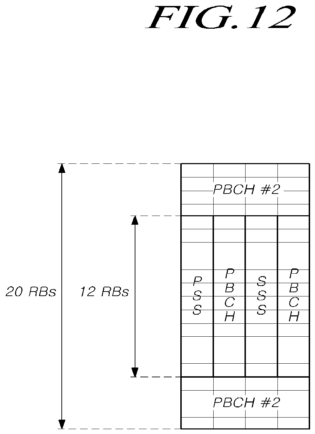

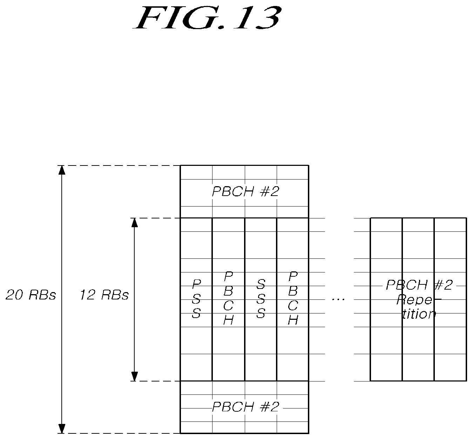

According to an embodiment, a method for transmitting a synchronization signal block (SSB) for a reduced-capacity UE may be newly configured. For example, the method may be configured to retransmit a PBCH in relation to SSB reception of the reduced-capacity UE. Furthermore, the method may be configured to retransmit information transmitted through four upper and lower RBs indicated by PBCH #2 among the general SSBs illustrated in FIG. 12 using RBs of the frequency band occupied by PSS, SSS, etc., as illustrated in FIG. 13.

In other words, a reduced-capacity UE uses a bandwidth limited according to reduced capacity, as described above. Since the bandwidth is composed of a smaller number of RBs than 20 RBs, such a reduced-capacity UE is able to receive 12 RBs around the PSS. However, the reduced-capacity UE is unable to receive a part of the typical PBCH #2 area. According to an embodiment, the method may be configured to retransmit the information to be transmitted through the PBCH #2 resource area as shown in FIG. 13 so that the reduced-capacity UE may successfully receive information transmitted to all the PBCH areas. In this case, the configuration information for receiving the SSB in the limited bandwidth may include information about the timing gap between the SSB and the PBCH #2 retransmission area. FIG. 13 illustrates that the PBCH #2 resource area is composed of 12 PRBs. However, according to another example, the PBCH #2 resource area may be composed of 14 or 16 PRBs.

Further, the above configuration information may include information about how the PBCH #2 retransmission area is mapped in the radio resource grid. Referring to FIG. 13, since the PBCH #2 area, disposed vertically above and below, is composed of a total of 32 cells, the PBCH #2 area contains a total of 32x12 REs. According to an embodiment, PBCH #2 of 32x12 REs may be transferred and mapped to a radio resource of 36x12 REs of the same frequency band as PSS. In this case, the extra resources as much as 4x12 REs may be configured without separate information transmission above or below some of the symbols where the transferred PBCH #2 is transmitted. Alternatively, the corresponding extra resources may be filled with repeated transmissions of DMRS or some symbols.

Meanwhile, according to the typical SSB structure, the PBCH #2 contains a DMRS composed of 8x12 Res . In this case, if the gap between the typical SSB and the PBCH #2 area to be retransmitted is not large, channel estimation may be sufficiently performed with the DMRS in the typical 12 RBs and the PSS. Therefore, according to an embodiment, it may be configured to transmit data of 24x12 REs using only 24x12 REs in two OFDM symbols excluding all DMRSs included in the conventional PBCH #2 area.

Alternatively, according to an example, it may also be configured to perform retransmission using only 24x12 REs in the two OFDM symbols through rate matching, without excluding the DRMSs included in the typical PBCH #2 area.

Alternatively, according to an embodiment, the PBCH #2 retransmission area may be positioned in the next 14 symbols to minimize PDSCH consumption. In this case, PBCH #2 may be retransmitted using all slots within 3, 4, or 6 RBs. Here, the number of RBs may be determined depending on whether the SSB is positioned in the corresponding slot or the like.

It has been described above that the typical SSB is transmitted, and then the PBCH #2 is retransmitted within a bandwidth supported by the reduced-capacity UE, but the embodiments are not limited thereto. According to another embodiment, the SSB may be reconfigured so that the PBCH #2 is transmitted from 12 RBs for three-symbols after four symbols of the conventional SSB, rather than the typical area. In other words, the SSB may be reconfigured to be mapped to the radio resource grid in 12 RBs over a total of 7 RBs.

Further, the above configuration information may include information about the SSB index in which PBCH #2 is retransmitted. The presence or absence of the PBCH #2 retransmission block and the retransmitted symbol and frequency position may be previously defined as specific values. This may be determined depending on the index of the typical SSB and may be determined as the index of the PSS in the SSB, the index of the SSS, the index of the transmitted global synchronization channel number (GSCN), or the index value of the DMRS.

Further, the symbol and frequency positions of the retransmission block may be configured to reuse the typical SSB block positions. In this case, part of the SSB usable positions may be used as the retransmission position. For example, after setting to use all indexes 1 to 4 in the common system configuration information, the SSB block may be actually transmitted only at indexes 1 and 3, and each PBCH retransmission block may be transmitted at indexes 2 and 4. In this case, the beam for PBCH retransmission may be managed with a beam index that is not used by the typical UE. This additional configuration information for the reduced-capacity UE may be transmitted in the form of a separate RRC or SIB.

Although it has been described that only PBCH #2 is retransmitted, the actual retransmission block may be configured to include part of PBCH #2 as shown in FIG. 13 or may be configured to include part of the typical PSS/SSS/PBCH #1. For example, only upper and lower 2RBs of PBCH #2 may be retransmitted, or PBCH #1 or PSS/SSS may be re-included in the retransmission block. In this case, an index not used by the typical UE may be used for the PSS/SSS in the retransmission block.

Referring back to FIG. 10, the UE may receive a first physical broadcast channel (PBCH) of the SSB in a first frequency resource (S1020) and receive a second PBCH of the SSB in a second frequency resource (S1030), based on the configuration information.

Referring to FIG. 12, the PBCH included in the typical SSB may be divided into a first PBCH (PBCH #1) included in 12 middle RBs and a second PBCH (PBCH #2) included in a total of 8 RBs at the upper and lower portions. In other words, the second PBCH may be configured as a PBCH other than the first PBCH among the PBCHs of the SSB. As described above, the configuration information for receiving the SSB in a limited bandwidth may include information about retransmission of the PBCH #2 of the SSB.

According to an embodiment, the reduced-capacity UE may receive the SSB and the retransmitted PBCH #2 based on the configuration information. In this case, the first frequency resource for receiving the first PBCH and the second frequency resource for receiving the second PBCH may each include less than 20 resource blocks. For example, each of the first frequency resource and the second frequency resource may be composed of a number of resource blocks corresponding to any one of 12, 14, or 16. The UE may monitor the PBCH #2 retransmission area and receive the corresponding PBCH #2 based on the timing gap information between the SSB and the PBCH #2 retransmission area included in the configuration information and the time and frequency resource information about the PBCH #2 retransmission area.

According to another embodiment, the first PBCH and the second PBCH may be configured to include the same information. In other words, the first PBCH may be configured to be retransmitted as the second PBCH without retransmitting the second PBCH in the conventional SSB. In this case, the typical SSB may be configured to be retransmitted without changing the structure of the SSB. This is because the reduced-capacity UE receives the SSB in a bandwidth less than 20 RBs, e.g., a bandwidth of 12, 14, or 16 RBs, and thus, even if the typical SSB is retransmitted as it is, unlike the second PBCH, the entire area of the first PBCH is received.

The reduced-capacity UE may soft-combine the first PBCH and the second PBCH including the same information. To that end, the first PBCH and the second PBCH may be configured in a quasi-co-located (QCL) relationship with each other. The first and second PBCH may be configured to have different resource mapping positions of demodulate reference signal (DMRS) or to indicate the same remaining minimum system information (RMSI) resource area.

When multiple SSBs are transmitted in the same SFN, the MIB transmitted through the PBCH may have the same value when the RMSI transmission area is identically designated. In this case, since only the DMRS position is changed, the UE may successfully decode the PBCH by soft-combining the plurality of pieces of SSB transmission information within the period. The index of the quasi-co-located SSB may be defined in advance, but may be implicitly transferred through the PSS, SSS, or PBCH index.

As described, the SSB for the reduced-capacity UE may be configured to be transmitted according to a separately configured period. In this case, the SSB for the reduced-capacity UE and configuration information for receiving the corresponding SSB may be previously stored in the reduced-capacity UE. In the case of initial access, the UE may receive the above-described separate SSB without performing the step of receiving the configuration information for receiving the SSB.

According to the embodiments described above, the reduced-capacity UE, which supports only a limited operating band compared to the typical UE, may successfully receive the synchronization signal.

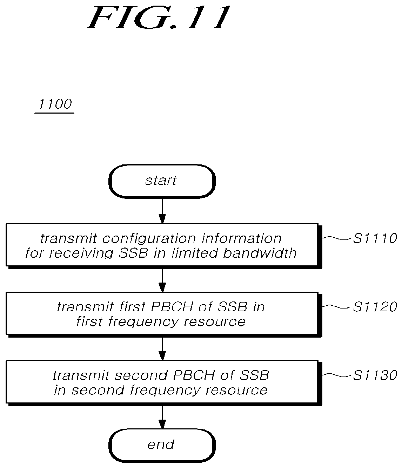

FIG. 11 illustrates a method (e.g., a procedure 1100) of a base station for transmitting a signal to a reduced-capability UE, according to an embodiment.

Referring to FIG. 11, the base station may transmit configuration information for receiving a synchronization signal block (SSB) in a limited bandwidth (S1110).

For the reduced-capacity UE, the base station may transmit configuration information for receiving the SSB in a limited bandwidth through system information or higher layer signaling. The corresponding configuration information may include information necessary for the reduced-capacity UE to receive the SSB, such as information about the SSB structure separately configured for the reduced-capacity UE, beam-related information used for transmission of the SSB, and the like.

According to an embodiment, the base station may newly configure an SSB transmission method for a reduced-capacity UE. For example, the base station may configure the PBCH to be retransmitted in relation to SSB reception of the reduced-capacity UE. Information transmitted through four upper and lower RBs indicated by PBCH #2 among the typical SSBs illustrated in FIG. 12 may be configured to be retransmitted using RBs of the frequency band occupied by PSS, SSS, etc., as illustrated in FIG. 13.

As described, the reduced-capacity UE uses a limited bandwidth. Since the bandwidth is composed of a smaller number of RBs than 20 RBs, the reduced-capacity UE is able to receive 12 RBs around the PSS. However, the reduced-capacity UE is unable to receive part of the typical PBCH #2 area. For the reduced-capacity UE to successfully receive information transmitted through all the PBCH areas, the information to be transmitted through the PBCH #2 resource area may be configured to be retransmitted as shown in FIG. 13 areas according to an embodiment. In this case, the configuration information for receiving the SSB in the limited bandwidth may include information about the timing gap between the SSB and the PBCH #2 retransmission area. FIG. 13 illustrates the PBCH #2 resource area composed of 12 PRBs according to an embodiment. However, the embodiments are not limited thereto. According to another embodiment, the PBCH #2 resource area may be composed of 14 or 16 PRBs.

Further, the above configuration information may include information about how the PBCH #2 retransmission area is mapped in the radio resource grid. Referring to FIG. 13, since the PBCH #2 area vertically disposed above and below is composed of a total of 32 cells, the PBCH #2 area contains a total of 32x12 REs. According to an embodiment, PBCH #2 of 32x12 REs may be transferred and mapped to a radio resource of 36x12 REs of the same frequency band as PSS. In this case, the extra resources as much as 4x12 REs may be configured without separate information transmission above or below some of the symbols where the transferred PBCH #2 is transmitted. Alternatively, the corresponding extra resources may be filled with repeated transmissions of DMRS or some symbols.

Meanwhile, according to the general SSB structure, PBCH#2 includes a DMRS composed of 8x12 REs . In this case, if the gap between the typical SSB and the PBCH #2 area to be retransmitted is not large, channel estimation may be sufficiently performed with the DMRS in the typical 12 RBs and the PSS. Therefore, according to an embodiment, the base station may make a configuration to transmit data of 24x12 REs using only 24x12 REs in two OFDM symbols excluding all DMRSs included in the typical PBCH #2 area.

Alternatively, according to an example, the base station may also perform retransmission using only 24x12 REs in the two OFDM symbols through rate matching without excluding the DRMSs included in the typical PBCH #2 area.

Alternatively, according to another embodiment, the PBCH #2 retransmission area may be disposed in the next 14 symbols to minimize PDSCH consumption. In this case, PBCH #2 may be retransmitted using all slots within 3, 4, or 6 RBs. Here, the number of RBs may be determined depending on whether the SSB is positioned in the corresponding slot or the like.

It has been described above that the typical SSB is transmitted, and then the PBCH #2 is retransmitted within a bandwidth supported by the reduced-capacity UE. However, the embodiments are not limited thereto. According to another embodiment, the SSB may be reconfigured so that the PBCH #2 is transmitted from 12 RBs for three-symbols after the fourth symbol of the typical SSB, rather than the typical area. In other words, the SSB may be reconfigured to be mapped to the radio resource grid in 12 RBs over a total of 7 RBs.

Further, the above configuration information may include information about the SSB index in which PBCH #2 is retransmitted. The presence or absence of the PBCH #2 retransmission block and the retransmitted symbol and frequency position may be previously defined as specific values. This may be determined depending on the index of the typical SSB and may be determined as the index of the PSS in the SSB, the index of the SSS, the index of the transmitted global synchronization channel number (GSCN), or the index value of the DMRS.

Further, the base station may configure the symbol and frequency positions of the retransmission block to reuse the typical SSB block positions. In this case, part of the SSB usable positions may be used as the retransmission position. For example, after setting to use all indexes 1 to 4 in the common system configuration information, the SSB block may be actually transmitted only at indexes 1 and 3, and each PBCH retransmission block may be transmitted at indexes 2 and 4. In this case, the beam for PBCH retransmission may be managed with a beam index that is not used by the typical UE. This additional configuration information for the reduced-capacity UE may be transmitted in the form of a separate RRC or SIB.

It has been described that only PBCH #2 is retransmitted. However, the embodiments are not limited thereto. According to another embodiment, the actual retransmission block may include part of PBCH #2, as shown in FIG. 13 or may include part of the typical PSS/SSS/PBCH #1. For example, only upper and lower 2RBs of PBCH #2 may be retransmitted, or PBCH #1 or PSS/SSS may be re-included in the retransmission block. In this case, an index not used by the conventional UE may be used for the PSS/SSS in the retransmission block.

Referring back to FIG. 11, the base station may transmit a first physical broadcast channel (PBCH) of the SSB in a first frequency resource (S1120) based on the configuration information and transmit a second PBCH of the SSB in a second frequency resource (S1130), based on the configuration information.

Referring to FIG. 12, the PBCH included in the typical SSB may be divided into a first PBCH (PBCH #1) included in 12 middle RBs and a second PBCH (PBCH #2) included in a total of 8 RBs at the upper and lower portions. In other words, the second PBCH may be configured as a PBCH other than the first PBCH among the PBCHs of the SSB. As described above, the configuration information for receiving the SSB in a limited bandwidth may include information about retransmission of the PBCH #2 of the SSB.

According to an embodiment, the base station may transmit the SSB to the reduced-capacity UE and retransmit the PBCH #2 based on the configuration information. In this case, the first frequency resource for receiving the first PBCH and the second frequency resource for receiving the second PBCH may each include less than 20 resource blocks. For example, each of the first frequency resource and the second frequency resource may be composed of a number of resource blocks corresponding to any one of 12, 14, or 16. The base station may retransmit the PBCH #2 based on the timing gap information between the SSB and the PBCH #2 retransmission area included in the configuration information and the time and frequency resource information about the PBCH #2 retransmission area.

According to another embodiment, the first PBCH and the second PBCH may be configured to include the same information. In other words, the base station may configure the first PBCH to be retransmitted as the second PBCH without retransmitting the second PBCH in the typical SSB. In this case, the typical SSB may be configured to be retransmitted without changing the structure of the SSB. This is because the reduced-capacity UE receives the SSB in a bandwidth less than 20 RBs, e.g., a bandwidth of 12, 14, or 16 RBs, and thus, even if the conventional SSB is retransmitted as it is, unlike the second PBCH, the entire area of the first PBCH is received.

The reduced-capacity UE may soft-combine the first PBCH and the second PBCH including the same information. To that end, the first PBCH and the second PBCH may be configured in a quasi-co-located (QCL) relationship with each other. The first and second PBCHs may be configured to have different resource mapping positions of demodulate reference signal (DMRS) or to indicate the same remaining minimum system information (RMSI) resource area.

When multiple SSBs are transmitted in the same SFN, the MIB transmitted through the PBCH may have the same value when the RMSI transmission area is identically designated. In this case, since only the DMRS position is changed, the UE may successfully decode the PBCH by soft-combining the plurality of pieces of SSB transmission information within the period. The index of the quasi-co-located SSB may be defined in advance, but may be implicitly transferred through the PSS, SSS, or PBCH index.

In the above, the SSB for the reduced-capacity UE may be configured to be transmitted according to a separately configured period. In this case, the SSB for the reduced-capacity UE and configuration information for receiving the corresponding SSB may be previously stored in the reduced-capacity UE. In the case of initial access, the UE may receive the above-described separate SSB without performing the step of receiving the configuration information for receiving the SSB.

According to the embodiments described above, the reduced capacity UE supporting only a limited operating band, compared to the typical UE, may successfully receive the synchronization signal.

Hereinafter, each embodiment related to transmission/reception of a synchronization signal block between the reduced-capacity UE and the base station in NR will be described with reference to the relevant drawings.

The disclosure provides a method for a reduced-capacity UE to successfully receive a synchronization signal, where the reduced-capacity UE has an operating bandwidth narrower than that required in the synchronization signal in NR. In particular, the disclosure provides a method of a reduced-capacity UE for receiving PBCH-related information which is in a range where the reduced-capacity UE does not receive and a method of a base station for providing PBCH configuration information to the reduced-capacity UE in advance.

The disclosure may provide (1) a method for designing a synchronization signal for a reduced-capacity UE and (2) a method for transmitting synchronization signal configuration information for a low-power UE.

### Embodiment 1. Design of synchronization signal for reduced-capacity UE

The disclosure introduces a method for designing a synchronization signal accessible by a reduced-capacity UE. In other words, the disclosure introduces a method for allowing a reduced-capacity UE having an operating bandwidth narrower than a bandwidth of a typical synchronization signal to receive an SSB. The disclosure introduces a method for retransmitting a PBCH and a rate-matching method for post-processing are proposed. Referring to FIG. 12, an example of a typical NR synchronization signal block in a radio resource grid is illustrated. As shown, the width of one square cell represents the OFDM symbol, and the height of one square cell represents 12 resource elements (REs) consecutive in one OFDM symbol.

According to an embodiment, the PBCH may be retransmitted in connection with receiving the SSB of the reduced-capacity UE. Referring to FIG. 12, the base station may be configured to retransmit information transmitted through four upper and lower RBs indicated by PBCH #2 among the general SSBs, using RBs in the frequency band occupied by PSS, SSS, or the like. In other words, the reduced-capacity UE uses a limited bandwidth. Since the bandwidth is composed of a smaller number of RBs than 20 RBs, the reduced-capacity UE is able to receive 12 RBs around the PSS. However, the reduced-capacity UE may be unable to receive part of the conventional PBCH #2 area. Accordingly, there is a need for a method for allowing the reduced-capacity UE to successfully receive information to be transmitted to all the PBCH areas. To that end, the base station may retransmit information to be transmitted through the PBCH #2 resource area in the form shown in FIG. 13. FIG. 13 illustrates that the PBCH #2 resource area is composed of 12 PRBs. However, the embodiments are not limited thereto. According to another embodiment, the PBCH #2 resource area may be composed of 14 or 16 PRBs.

Referring to FIG. 13, since the PBCH #2 area vertically disposed above and below is composed of a total of 32 cells, the PBCH #2 area is composed of a total of 32x12 REs. According to an embodiment, as shown in FIG. 13, PBCH #2 of 32x12 REs may be transferred and mapped to a radio resource of 36x12 REs of the same frequency band as PSS. In this case, the extra resources as much as 4x12 REs may be configured without separate information transmission above or below some of the symbols where the transferred PBCH #2 is transmitted. Alternatively, the corresponding extra resources may be filled with repeated transmissions of DMRS or some symbols.

Meanwhile, according to the general SSB structure, PBCH#2 includes DMRS composed of 8x12 REs . In this case, if the gap between the typical SSB and the PBCH #2 area to be retransmitted is not large, channel estimation may be sufficiently performed with the DMRS in the typical 12 RBs and the PSS. Therefore, according to an embodiment, it may be configured to transmit data of 24x12 REs using only 24x12 REs in two OFDM symbols, rather than three symbols as shown in FIG. 13, except for all DMRSs included in the conventional PBCH #2 area.

According to another embodiment, it may be configured to perform rate matching while fully using the DMRS included in the conventional PBCH #2 area to cut a value at a specific position from the conventional PBCH #2 and perform transmission using only 24x12 REs in two OFDM symbols.

According to further another embodiment, a PBCH repetition may be disposed in the next 14 symbols to minimize PDSCH consumption. In this case, PBCH #2 repetition may be transmitted using all slots within 3, 4, or 6 RBs. Here, the number of RBs may be determined depending on whether the SSB is positioned in the corresponding slot or the like.

The presence or absence of the PBCH #2 retransmission block and the retransmitted symbol and frequency position may be previously defined as specific values. This may be determined depending on the index of the typical SSB and may be determined as the index of the PSS in the SSB, the index of the SSS, the index of the transmitted global synchronization channel number (GSCN), or the index value of the DMRS.

Further, the symbol and frequency positions of the retransmission block may be configured to reuse the typical SSB block positions. In this case, part of the SSB usable positions may be used as the retransmission position. For example, after setting to use all indexes 1 to 4 in the common system configuration information, the SSB block may be actually transmitted only at indexes 1 and 3, and each PBCH retransmission block may be transmitted at indexes 2 and 4. In this case, the beam for PBCH retransmission may be managed with a beam index that is not used by the typical UE. This additional configuration information for the reduced-capacity UE may be transmitted in the form of a separate RRC or SIB.

As described, it has been described that only PBCH #2 is retransmitted. However, the actual retransmission block may include part of PBCH #2 shown in FIG. 13 or may include part of the conventional PSS/SSS/PBCH #1. For example, only upper and lower 2RBs of PBCH #2 may be retransmitted, or PBCH #1 or PSS/SSS may be re-included in the retransmission block. In this case, an index not used by the conventional UE may be used for the PSS/SSS in the retransmission block.

According to an embodiment, the reduced-capacity UE may be configured to perform soft combining to receive the PBCH. The typical SSB is defined so that various beams are selected in advance, and within one period, up to 4 to 8 beams may be transmitted for FR1 and 64 beams may be transmitted for FR2. Here, some beam information may be configured to use the same beam, and the same information may be inserted into the PBCH transmitted to the corresponding area so that the UE may perform soft combining through reception of the corresponding area.

When the corresponding SSB is transmitted in the same SFN, the MIB transmitted through the PBCH may have the same value when the RMSI transmission area is identically designated. In this case, since only the DMRS position is changed, even if soft combining is not performed after one period, if the UE knows such information in advance, the UE may successfully decode the PBCH by soft-combining the plurality of pieces of SSB transmission information within the period. The index of the quasi-co-located SSB may be defined in advance, but may be implicitly transferred through the PSS, SSS, or PBCH index.

### Embodiment 2. Transmission of synchronization signal configuration information for reduced-capacity UE

The disclosure introduces a method for transferring configuration information added through the above-described embodiment 1 for a synchronization signal configured to be received by a reduced-capacity UE. According to an embodiment, the embodiments reduce a search amount of a UE when the UE performs handover from another base station rather than initial access.

In this case, it may be implemented in the form of transferring the time and frequency information about the SSB for the reduced-capacity UE in the adjacent cell. The transfer of the corresponding information may be defined by adding relevant information to SIB3 or SIB4 or as a new SIB form or a new RRC. In this case, the newly transferred information to be used in embodiment 1 may include the gap of PBCH #2 to be retransmitted, and SSB index pair/group information having the same beam.

The embodiments of the disclosure may be applied independently or in any type of combination. Further, among the terms used herein, novel terms are ones arbitrarily chosen for ease of understanding, and the content of the disclosure is applicable even where other terms with the same meaning are used.

According to the embodiments above, the reduced capacity UE may successfully perform synchronization signal reception.

Hereinafter, configurations of a UE and a base station which may perform all or some of the embodiments described above in connection with FIGS. 1 to 13 are described below with reference to the drawings. The above-described description may be omitted to avoid redundant description, and, in that case, the omitted content may be applied in substantially the same manner to the following description as long as it does not go against the technical spirit of the invention.

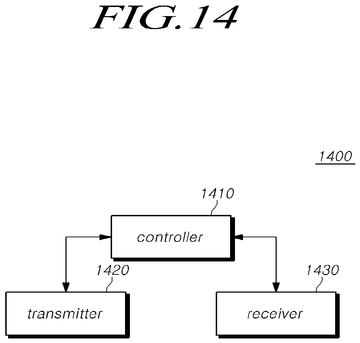

FIG. 14 is a block diagram illustrating a user equipment (UE) 1400 according to an embodiment.

Referring to FIG. 14, according to an embodiment, a UE 1400 includes a controller 1410, a transmitter 1420, and a receiver 1430.

The controller 1410 controls the overall operation of the UE 1400 according to the method of a reduced-capacity UE for receiving signals. The transmitter 1420 transmits uplink control information and data or messages to the base station via a corresponding channel according to the control of the controller 1410. The receiver 1430 receives downlink control information and data or messages from the base station via a corresponding channel according to the control of the controller 1410.

The controller 1410 of the reduced-capacity UE may control the receiver 1430 to receive configuration information for receiving an SSB in a limited bandwidth from the base station. The controller 1410 may receive configuration information for receiving an SSB in the limited bandwidth through system information or higher layer signaling. The corresponding configuration information may include information necessary for the reduced-capacity UE to receive the SSB, such as information about the SSB structure separately configured for the reduced-capacity UE, beam-related information used for transmission of the SSB, and the like.

According to an embodiment, an SSB transmission method for a reduced-capacity UE may be newly configured. For example, the PBCH may be configured to be retransmitted in relation to SSB reception of the reduced-capacity UE. Information transmitted through four upper and lower RBs indicated by PBCH #2 among the general SSBs illustrated in FIG. 12 may be configured to be retransmitted using RBs of the frequency band occupied by PSS, SSS, etc., as illustrated in FIG. 13.

The information to be transmitted through the PBCH #2 resource area may be configured to be retransmitted to allow the receiver 1430 to successfully receive the information to be transmitted to all the PBCH areas. In this case, the configuration information for receiving the SSB in the limited bandwidth may include information about the timing gap between the SSB and the PBCH #2 retransmission area.

Further, the above configuration information may include information about how the PBCH #2 retransmission area is mapped in the radio resource grid. Referring to FIG. 13, since the PBCH #2 area vertically disposed above and below is composed of a total of 32 cells, the PBCH #2 area is composed of a total of 32x12 REs. According to an example, PBCH #2 of 32x12 REs may be transferred and mapped to a radio resource of 36x12 REs of the same frequency band as PSS. In this case, the extra resources as much as 4x12 REs may be configured without separate information transmission above or below some of the symbols where the transferred PBCH #2 is transmitted. Alternatively, the corresponding extra resources may be filled with repeated transmissions of DMRS or some symbols.

Meanwhile, according to the general SSB structure, PBCH#2 include DMRS composed of 8x12 REs . In this case, if the gap between the typical SSB and the PBCH #2 area to be retransmitted is not large, channel estimation may be sufficiently performed with the DMRS in the conventional 12 RBs and the PSS. Therefore, according to another embodiment, it may be configured to transmit data of 24x12 REs using only 24x12 REs in two OFDM symbols except for all DMRSs included in the conventional PBCH #2 area.

Alternatively, according to an embodiment, it may also be configured to perform retransmission using only 24x12 REs in the two OFDM symbols through rate matching without excluding the DRMSs included in the conventional PBCH #2 area.

According to another embodiment, the PBCH #2 retransmission area may be disposed in the next 14 symbols to minimize PDSCH consumption. In this case, PBCH #2 may be retransmitted using all slots within 3, 4, or 6 RBs. Here, the number of RBs may be determined depending on whether the SSB is positioned in the corresponding slot or the like.

Further, the above configuration information may include information about the SSB index for retransmitting PBCH #2. The presence or absence of the PBCH #2 retransmission block and the retransmitted symbol and frequency position may be previously defined as specific values. This may be determined depending on the index of the conventional SSB and may be determined as the index of the PSS in the SSB, the index of the SSS, the index of the transmitted global synchronization channel number (GSCN), or the index value of the DMRS.

Further, the symbol and frequency positions of the retransmission block may be configured to reuse the typical SSB block positions. In this case, part of the SSB usable positions may be used as the retransmission position. For example, after setting to use all indexes 1 to 4 in the common system configuration information, the SSB block may be actually transmitted only at indexes 1 and 3, and each PBCH retransmission block may be transmitted at indexes 2 and 4. In this case, the beam for PBCH retransmission may be managed with a beam index that is not used by the typical UE. This additional configuration information for the reduced-capacity UE may be transmitted in the form of a separate RRC or SIB.

The controller 1410 may receive a first physical broadcast channel (PBCH) of the SSB in a first frequency resource and receive a second PBCH of the SSB in a second frequency resource, based on the configuration information.

Referring to FIG. 12, the PBCH included in the typical SSB may be divided into a first PBCH (PBCH #1) included in 12 middle RBs and a second PBCH (PBCH #2) included in a total of 8 RBs at the upper and lower portions. In other words, the second PBCH may be configured as a PBCH other than the first PBCH among the PBCHs of the SSB. As described above, the configuration information for receiving the SSB in a limited bandwidth may include information about retransmission of the PBCH #2 of the SSB.

According to an embodiment, the controller 1410 may receive the SSB and the retransmitted PBCH #2 based on the configuration information. In this case, the first frequency resource for receiving the first PBCH and the second frequency resource for receiving the second PBCH may each include less than 20 resource blocks. For example, each of the first frequency resource and the second frequency resource may be composed of a number of resource blocks corresponding to any one of 12, 14, or 16. The controller 1410 may monitor the PBCH #2 retransmission area and receive the corresponding PBCH #2 based on the timing gap information between the SSB and the PBCH #2 retransmission area included in the configuration information and the time and frequency resource information about the PBCH #2 retransmission area.

According to another embodiment, the first PBCH and the second PBCH may be configured to include the same information. In other words, the first PBCH may be configured to be retransmitted as the second PBCH without retransmitting the second PBCH in the typical SSB. In this case, the typical SSB may be configured to be retransmitted without changing the structure of the SSB. This is because the reduced-capacity UE receives the SSB in a bandwidth less than 20 RBs, e.g., a bandwidth of 12, 14, or 16 RBs, and thus, even if the typical SSB is retransmitted as it is, unlike the second PBCH, the entire area of the first PBCH is received.

The controller 1410 may soft-combine the first PBCH and the second PBCH including the same information. To that end, the first PBCH and the second PBCH may be configured in a quasi-co-located (QCL) relationship with each other. The first and second PBCHs may be configured to have different resource mapping positions of demodulate reference signal (DMRS) or to indicate the same remaining minimum system information (RMSI) resource area.

When multiple SSBs are transmitted in the same SFN, the MIB transmitted through the PBCH may have the same value when the RMSI transmission area is identically designated. In this case, since only the DMRS position is changed, the controller 1410 may successfully decode the PBCH by soft-combining the plurality of pieces of SSB transmission information within the period. The index of the quasi-co-located SSB may be defined in advance, but may be implicitly transferred through the PSS, SSS, or PBCH index.

According to the embodiments described above, the reduced-capacity UE, which supports only a limited operating band compared to the typical UE, may successfully receive the synchronization signal.

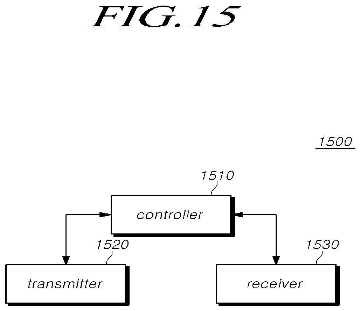

FIG. 15 is a block diagram illustrating a base station 1500 according to an embodiment.

Referring to FIG. 15, according to an embodiment, a base station 1500 includes a controller 1510, a transmitter 1520, and a receiver 1530.

The controller 1510 controls the overall operation of the base station 1500 according to the method of the base station for transmitting a signal to the reduced-capacity UE. The transmitter 1520 and the receiver 1530 are used to transmit or receive signals or messages or data necessary for performing the above-described embodiments with the UE according to the control of the controller 1510.

The controller 1510 may control the transmitter 1520 to transmit configuration information for receiving a synchronization signal block (SSB) in a limited bandwidth.

For the reduced-capacity UE, the controller 1510 may transmit configuration information for receiving the SSB in a limited bandwidth through system information or higher layer signaling. The corresponding configuration information may include information necessary for the reduced-capacity UE to receive the SSB. For example, the configuration information may include information about the SSB structure separately configured for the reduced-capacity UE, beam-related information used for transmission of the SSB, and the like.

According to an embodiment, the controller 1510 may newly configure an SSB transmission method for a reduced-capacity UE. For example, the controller 1510 may configure the PBCH to be retransmitted in relation to SSB reception of the reduced-capacity UE. Information transmitted through four upper and lower RBs indicated by PBCH #2 among the general SSBs illustrated in FIG. 12 may be configured to be retransmitted using RBs of the frequency band occupied by PSS, SSS, etc., as illustrated in FIG. 13.

In other words, since the bandwidth is composed of a smaller number of RBs than 20 RBs, the reduced capacity UE is able to receive 12 RBs around the PSS. However, the reduced capacity UE may be unable to receive part of the conventional PBCH #2 area. Accordingly, the controller 1510 may retransmit the information to be transmitted through the PBCH #2 resource area as shown in FIG. 13 in accordance with an embodiment so that the reduced-capacity UE may successfully receive information to be transmitted to all the PBCH areas. In this case, the configuration information for receiving the SSB in the limited bandwidth may include information about the timing gap between the SSB and the PBCH #2 retransmission area. FIG. 13 illustrates that the PBCH #2 resource area is composed of 12 PRBs. However, the embodiments are not limited thereto. According to another embodiment, the PBCH #2 resource area may be composed of 14 or 16 PRBs.

Further, the above configuration information may include information about how the PBCH #2 retransmission area is mapped in the radio resource grid. Referring to FIG. 13, since the PBCH #2 area vertically disposed above and below is composed of a total of 32 cells, the PBCH #2 area contains a total of 32x12 REs. According to an embodiment, PBCH #2 of 32x12 REs may be transferred and mapped to a radio resource of 36x12 REs of the same frequency band as PSS. In this case, the extra resources as much as 4x12 REs may be configured without separate information transmission above or below some of the symbols where the transferred PBCH #2 is transmitted. Alternatively, the corresponding extra resources may be filled with repeated transmissions of DMRS or some symbols.

Meanwhile, according to the general SSB structure, PBCH #2 includes a DMRS consisting of 8x12 REs.. In this case, if the gap between the typical SSB and the PBCH #2 area to be retransmitted is not large, channel estimation may be sufficiently performed with the DMRS in the typical 12 RBs and the PSS. Therefore, according to an embodiment, the controller 1510 may make a configuration to transmit data of 24x12 REs using only 24x12 REs in two OFDM symbols except for all DMRSs included in the conventional PBCH #2 area.

According to another embodiment, the controller 1510 may also perform retransmission using only 24x12 REs in the two OFDM symbols through rate matching without excluding the DRMSs included in the conventional PBCH #2 area.

According to further another embodiment, the PBCH #2 retransmission area may be disposed in the next 14 symbols to minimize PDSCH consumption. In this case, PBCH #2 may be retransmitted using all slots within 3, 4, or 6 RBs. Here, the number of RBs may be determined depending on whether the SSB is positioned in the corresponding slot or the like.

Further, the above configuration information may include information about the SSB index in which PBCH #2 is retransmitted. The presence or absence of the PBCH #2 retransmission block and the retransmitted symbol and frequency position may be previously defined as specific values. This may be determined depending on the index of the typical SSB and may be determined as the index of the PSS in the SSB, the index of the SSS, the index of the transmitted global synchronization channel number (GSCN), or the index value of the DMRS.

Further, the controller 1510 may configure the symbol and frequency positions of the retransmission block to reuse the typical SSB block positions. In this case, part of the SSB usable positions may be used as the retransmission position. For example, after setting to use all indexes 1 to 4 in the common system configuration information, the SSB block may be actually transmitted only at indexes 1 and 3, and each PBCH retransmission block may be transmitted at indexes 2 and 4. In this case, the beam for PBCH retransmission may be managed with a beam index that is not used by the typical UE. This additional configuration information for the reduced-capacity UE may be transmitted in the form of a separate RRC or SIB.

The controller 1510 may transmit a first physical broadcast channel (PBCH) of the SSB in a first frequency resource based on the configuration information and transmit a second PBCH of the SSB in a second frequency resource, based on the configuration information.

Referring to FIG. 12, the PBCH included in the typical SSB may be divided into a first PBCH (PBCH #1) included in 12 middle RBs and a second PBCH (PBCH #2) included in a total of 8 RBs at the upper and lower portions. In other words, the second PBCH may be configured as a PBCH other than the first PBCH among the PBCHs of the SSB. As described above, the configuration information for receiving the SSB in a limited bandwidth may include information about retransmission of the PBCH #2 of the SSB.

According to an embodiment, the controller 1510 may control the transmitter 1520 to transmit the SSB to the reduced-capacity UE and retransmit the PBCH #2 based on the configuration information. In this case, the first frequency resource for receiving the first PBCH and the second frequency resource for receiving the second PBCH may each include less than 20 resource blocks. For example, each of the first frequency resource and the second frequency resource may be composed of a number of resource blocks corresponding to any one of 12, 14, or 16. The controller 1510 may retransmit the PBCH #2 based on the timing gap information between the SSB and the PBCH #2 retransmission area included in the configuration information and the time and frequency resource information about the PBCH #2 retransmission area.

According to another embodiment, the first PBCH and the second PBCH may be configured to include the same information. In other words, the controller 1510 may configure the first PBCH to be retransmitted as the second PBCH without retransmitting the second PBCH in the typical SSB. In this case, the typical SSB may be configured to be retransmitted without changing the structure of the SSB. This is because the reduced-capacity UE receives the SSB in a bandwidth less than 20 RBs, e.g., a bandwidth of 12, 14, or 16 RBs, and thus, even if the typical SSB is retransmitted as it is, unlike the second PBCH, the entire area of the first PBCH is received.

The reduced-capacity UE may soft-combine the first PBCH and the second PBCH including the same information. To that end, the first PBCH and the second PBCH may be configured in a quasi-co-located (QCL) relationship with each other. The first and second PBCHs may be configured to have different resource mapping positions of demodulate reference signal (DMRS) or to indicate the same remaining minimum system information (RMSI) resource area.

When multiple SSBs are transmitted in the same SFN, the MIB transmitted through the PBCH may have the same value when the RMSI transmission area is identically designated. In this case, since only the DMRS position is changed, the UE may successfully decode the PBCH by soft-combining the plurality of pieces of SSB transmission information within the period. The index of the quasi-co-located SSB may be defined in advance, but may be implicitly transferred through the PSS, SSS, or PBCH index.

According to the embodiments described above, the reduced-capacity UE , which supports only a limited operating band compared to the typical UE, may successfully receive the synchronization signal.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0002324 filed on January 6, 2022, and 10-2023-0001148 filed on January 4, 2023 in the Korean Intellectual Property Office, the disclosures of which are incorporated by reference herein in their entireties.

## Claims

1. A method for receiving a signal by a reduced-capacity user equipment (UE), the method comprising:
receiving configuration information for receiving a synchronization signal block (SSB) in a limited bandwidth from a base station;
receiving a first physical broadcast channel (PBCH) of the SSB in a first frequency resource based on the configuration information; and
receiving a second PBCH of the SSB in a second frequency resource based on the configuration information.

2. The method of claim 1, wherein the first frequency resource and the second frequency resource each are configured of less than 20 resource blocks (RBs).

3. The method of claim 1, wherein the second PBCH is configured of a PBCH other than the first PBCH among PBCHs of the SSB.

4. The method of claim 1, wherein the first PBCH and the second PBCH are configured to include the same information, and wherein the method further comprises soft-combining the first PBCH and the second PBCH.

5. The method of claim 3 or 4, wherein the first PBCH and the second PBCH are configured to have a quasi-co-located (QCL) relationship, and are configured to have different resource mapping positions of a demodulate reference signal (DMRS) or configured to indicate the same remaining minimum system information (RMSI) resource area.

6. A method for transmitting a signal to a reduced-capacity UE, by a base station, the method comprising:
transmitting configuration information for receiving a synchronization signal block (SSB) in a limited bandwidth;
transmitting a first physical broadcast channel (PBCH) of the SSB in a first frequency resource based on the configuration information; and
transmitting a second PBCH of the SSB in a second frequency resource based on the configuration information.

7. The method of claim 6, wherein the first frequency resource and the second frequency resource each are configured of less than 20 resource blocks (RBs).

8. The method of claim 6, wherein the second PBCH is configured of a PBCH other than the first PBCH among PBCHs of the SSB.

9. The method of claim 6, wherein the first PBCH and the second PBCH are configured to include the same information.

10. The method of claim 8 or 9, wherein the first PBCH and the second PBCH are configured to have a quasi-co-located (QCL) relationship, and are configured to have different resource mapping positions of a demodulate reference signal (DMRS) or configured to indicate the same remaining minimum system information (RMSI) resource area.

11. A reduced-capacity UE receiving a signal, comprising:
a transmitter;
a receiver; and
a controller controlling the transmitter and the receiver, receiving configuration information for receiving a synchronization signal block (SSB) in a limited bandwidth from a base station, receiving a first physical broadcast channel (PBCH) of the SSB in a first frequency resource based on the configuration information, and receiving a second PBCH of the SSB in a second frequency resource based on the configuration information.

12. The reduced-capacity UE of claim 11, wherein the first frequency resource and the second frequency resource each are configured of less than 20 resource blocks (RBs).

13. The reduced-capacity UE of claim 11, wherein the second PBCH is configured of a PBCH other than the first PBCH among PBCHs of the SSB.

14. The reduced-capacity UE of claim 11, wherein the first PBCH and the second PBCH are configured to include the same information, and wherein the controller soft-combines the first PBCH and the second PBCH.

15. The reduced-capacity UE of claim 13 or 14, wherein the first PBCH and the second PBCH are configured to have a quasi-co-located (QCL) relationship, and are configured to have different resource mapping positions of a demodulate reference signal (DMRS) or configured to indicate the same remaining minimum system information (RMSI) resource area.

16. A base station transmitting a signal to a reduced-capacity UE, comprising:
a transmitter;
a receiver; and
a controller controlling the transmitter and the receiver, transmitting configuration information for receiving a synchronization signal block (SSB) in a limited bandwidth, transmitting a first physical broadcast channel (PBCH) of the SSB in a first frequency resource based on the configuration information, and transmitting a second PBCH of the SSB in a second frequency resource based on the configuration information.

17. The base station of claim 16, wherein the first frequency resource and the second frequency resource each are configured of less than 20 resource blocks (RBs).

18. The base station of claim 16, wherein the second PBCH is configured of a PBCH other than the first PBCH among PBCHs of the SSB.

19. The base station of claim 16, wherein the first PBCH and the second PBCH are configured to include the same information.

20. The base station of claim 18 or 19, wherein the first PBCH and the second PBCH are configured to have a quasi-co-located (QCL) relationship, and are configured to have different resource mapping positions of a demodulate reference signal (DMRS) or configured to indicate the same remaining minimum system information (RMSI) resource area.
